# EUROPEAN PATENT SPECIFICATION

(11) **EP 2 846 014 B1**
(45) Date of publication and mention of the grant of the patent: **15.03.2017**
(21) Application number: 13183685.0
(22) Date of filing: 10.09.2013
(51) Int. Cl.: F01N 3/20

(54) **Module for an SCR system and system comprising same.**
Modul für ein SCR-System und System damit
Module pour un système SCR et système le comprenant

(43) Date of publication of application: 11.03.2015
(73) Proprietor: Inergy Automotive Systems Research (Société Anonyme), 1120 Bruxelles (BE)
(72) Inventor: Herdier, Romain, 1180 Uccle (BE); Naydenov, Volodia, 1348 Louvain-la-Neuve (BE); Jannot, Frédéric, 1470 Bousval (BE)
(74) Representative: Remy, Vincent Noel Paul

(56) References cited:
- EP-A1- 1 681 443
- EP-A1- 1 752 762
- WO-A1-2007/141312
- WO-A1-2012/080132
- WO-A1-2012/107351
- US-A1- 2010 199 641

## Description

The present invention pertains to systems for selective catalytic reduction of NOₓ in the exhaust gas of internal combustion engines. In particular, the present invention pertains to a module including sensors for assessing properties of the content of a urea tank (for example, temperature and/or quality) , as disclosed e.g. in EP 1752762A1, EP 1681443A1 or WO 2012/080132.

International patent application publication WO 2007/141312 A1 in the name of the present applicant discloses a system for storing an internal combustion engine exhaust gas liquid additive, the said system comprising a tank for storing the additive and an "immersed" baseplate positioned through an opening made in the bottom wall of the tank, the said baseplate comprising at least one orifice through which a system for injecting the said additive into the exhaust gases can be fed, and also incorporating at least one other active component of the storage system and/or of the injection system. It is known from this document to equip the base plate with a temperature sensor, a quality sensor, or a pressure sensor. This document does not address the spatial issues of placing multiple sensors on the base plate. If the system needs to accommodate multiple sensors, it is customary to arrange one or more sensors at a different place in the tank, off the base plate.

It is a disadvantage of the known arrangements that they are not able to measure both temperature and urea quality at the point closest to the urea injection point.

It is an object of embodiments of the present invention to overcome this disadvantage.

According to an aspect of the invention, there is provided a module for an SCR system, the module having a base plate with a socket and a combined temperature and urea quality sensor mounted in the socket, the module further comprising an electrical interface connected to the combined temperature and urea quality sensor,
wherein the electrical interface is also adapted to alternatively connect to a temperature sensor.

Embodiments of the present invention are based on the insight of the inventor that while it may be possible to place a combined quality and temperature sensor on the base plate to save space, this would require a redesign of the entire module. In addition, the resulting module would be more expensive, regardless of whether the quality measurement function is actually desired by the end customer. Thus, the invention provides a module architecture that supports a combined quality and temperature sensor, which could be
replaced by a temperature sensor depending on the requirements of the customer, without requiring substantive modifications. In some embodiments, minor modifications may be needed, as will be described in more detail below.

According to an aspect of the invention, there is provided an SCR system comprising a module as described above and an ECU, the electrical interface connecting the combined temperature and urea quality sensor to the ECU, wherein the ECU is configured to read out a signal received via the electrical interface as digital sensor data. In an embodiment of the SCR system according to the present invention, the ECU is further configured to read out a signal received from the electrical interface as analog sensor data, when the signal originates from a temperature sensor.

It is an advantage of this embodiment that the SCR system may be equipped with a combined quality and temperature sensor, or a temperature sensor, depending on the requirements of the customer, without requiring modifications of the wiring or the ECU.

According to an aspect of the invention, there is provided a motor vehicle comprising the SCR system as described above.

These and other aspects and advantages of the present invention will now be described in more detail with reference to the accompanying drawings, in which:
- Figure 1 represents a module according to an embodiment of the present invention; and
- Figure 2 represents a module having a slightly different socket, in which a temperature sensor is mounted instead of a combined temperature and quality sensor.

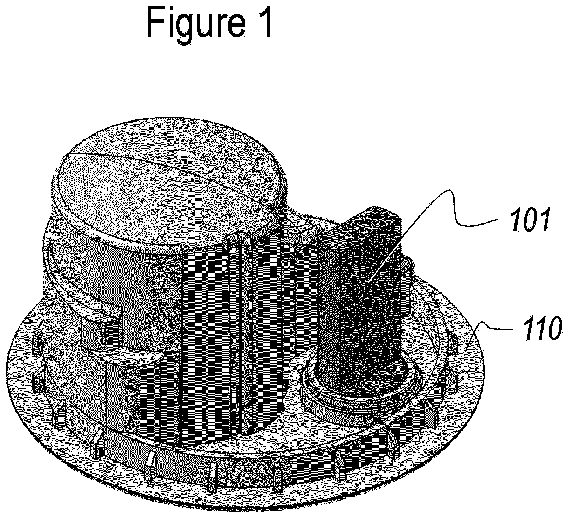

Figure 1 represents a base plate **110** of a delivery module for a vehicular fluid tank, in particular a urea solution tank of an SCR system. Reference is made to WO 2009/007405, in the name of the present applicant, for a detailed description of a known module. Fluid communication between the inside and the outside of the tank is achieved by means of tubes passing through the base plate **110** (not visible in the views reproduced here). The base plate **110** is sometimes referred to in the art as the "flange". The module may be attached to a tank wall by placing it over an opening provided for that purpose, and securing it.

The module of Figure 1 integrates a combined quality and temperature sensor **101**, i.e. a quality sensor also capable of measuring temperature. This allows replacing the temperature sensor of current designs by the quality and temperature sensor. The module design and the electronic architecture according to the invention are such that the combined quality and temperature sensor, and the "legacy" temperature sensor of the SCR module become intercheangeable.

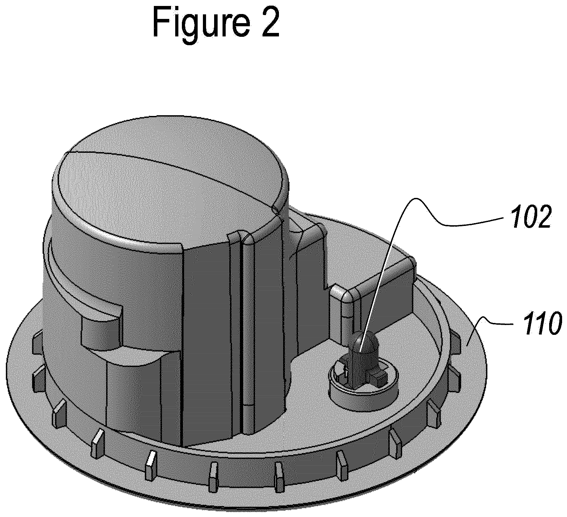

In Figure 2, the module is shown with a legacy temperature sensor **102**.

The interchangeability may be achieved with physically identical module forms (i.e., where the two types of sensors have the same footprint and the same mechanical mounting means), or with different module forms which can be produced with minimal changes to the moulding process (e.g., by moulding the actual mounting socket by means of an interchangeable socket). In both cases, the production process becomes highly uniform for both variants. In particular, the electrical interface at the bottom of the base plate (the side facing outwards of the tank, not visible in the views reproduced here) is identical for both variants, such that no distinction needs to be made in the further wiring and assembly process.

The ECU is preferably capable of correctly reading the incoming signal on the same wire pair, regardless of whether the connected sensor is a combined quality and temperature sensor or a temperature sensor, notwithstanding the fact that sensors of the former type typically provide a digital signal, while sensors of the latter type provides an analog signal. The inventors have found that this effect can be achieved by branching the sensor signal in parallel towards a digital I/O port and to an analog (diagnostic) port. When the digital sensor signal on the digital input port is detected as timeout (continuous analog signal) and there is no fault detected on analog (diagnostic) input, then the temperature sensor is connected and the analog (diagnostic) port is used to measure the temperature sensor signal; otherwise the combined quality and temperature sensor is connected and the digital port is used to read the signal from the combined quality and temperature sensor.

The module of the present invention may be mounted in a urea tank of an SCR system. The SCR system may be arranged in a vehicle with an internal combustion engine.

While the invention has been described hereinabove with reference to separate embodiments, this was done for clarifying purposes only. The skilled person will appreciate that features described in connection one embodiment, can also be applied to other embodiments, with the same technical effects and advantages. Furthermore, the scope of the invention is not limited to these embodiments, but is defined by the accompanying claims.

## Claims

1. A module for an SCR system, the module having a base plate (110) with a socket and a combined temperature and urea quality sensor (101) or alternatively a temperature-only sensor (102) mounted in said socket, the module further comprising an electrical interface connected to said combined temperature and urea quality sensor (101) or said temperature-only sensor (102) respectively, wherein the two types of sensors have the same footprint and the same mechanical mounting means, and wherein said electrical interface is adapted to alternatively connect to said combined temperature and urea quality sensor (101) or to said temperature sensor (102).

2. An SCR system comprising a module according to claim 1 and an ECU, said electrical interface connecting said combined temperature and urea quality sensor (101) to said ECU, wherein said ECU is configured to read out a signal received via said electrical interface as digital sensor data.

3. The SCR system according to claim 2, wherein said ECU is further configured to read out a signal received from said electrical interface as analog sensor data, when said signal originates from a temperature sensor (102).

4. A motor vehicle comprising the SCR system according to claim 2 or claim 3.

5. A process for manufacturing a module for an SCR system, the module having a base plate (110) with a socket and a sensor able to be mounted in said socket, the module further comprising an electrical interface able to be connected to said sensor, said process comprising the following step:
- according to a first variant, moulding a module with a socket in which a combined temperature and urea quality sensor (101) is able to be mounted, or
- according to a second variant, moulding a module of a different form than in said first variant, with a socket in which a temperature-only sensor (102) is able to be mounted, wherein the socket in the first variant and the socket in the second variant are interchangeable, and
wherein said electrical interface is identical in each of the above variants of said module.

## Patentansprüche

1. Ein Modul für ein SCR-System, wobei das Modul eine Basisplatte (110) mit einer Buchse und mit einem an die genannte Buchse angeschlossenen kombinierten Temperatur- und Harnstoffqualitätssensor oder alternativ mit einem an die genannte Buchse angeschlossenen Sensor (102) nur für Temperaturen hat, wobei das Modul weiterhin eine elektrische Schnittstelle aufweist, wobei die elektrische Schnittstelle mit dem genannten kombinierten Temperatur- und Harnstoffqualitätssensor (101) oder mit dem genannten Sensor (102) nur für Temperaturen verbunden ist, wobei die zwei Typen von Sensoren den gleichen Fußabdruck und die gleichen mechanischen Anschlussmittel haben, und wobei die genannte elektrische Schnittstelle dazu eingerichtet ist, sich alternativ mit dem genannten kombinierten Temperatur- und Harnstoffqualitätssensor (101) oder mit dem genannten Temperatursensor (102) zu verbinden.

2. Ein SCR-System umfassend ein Modul nach Anspruch 1 und eine ECU wobei die genannte elektrische Schnittstelle den genannten kombinierten Temperatur- und Harnstoffqualitätssensor (101) mit der genannten ECU verbindet, wobei die genannte ECU dazu eingerichtet ist, ein Signal auszulesen, welches über die genannte elektrische Schnittstelle als digitale Sensordaten empfangen wurde.

3. Das SCR-System nach Anspruch 2, wobei die genannte ECU weiterhin dazu eingerichtet ist, ein Signal auszulesen, welches von der genannten elektrischen Schnittstelle als analoge Sensordaten empfangen ist, wenn das genannte Signal von einem Temperatursensor (102) ausgeht.

4. Ein Motorfahrzeug umfassend das SCR-System nach Anspruch 2 oder 3.

5. Ein Verfahren zur Herstellung eines Moduls für ein SCR-System, wobei das Modul eine Basisplatte (110) mit einer Buchse und einen Sensor hat, welcher an die genannte Buchse angeschlossen werden kann, wobei das Modul weiterhin eine elektrische Schnittstelle aufweist, welche mit dem genannten Sensor verbunden werden kann, wobei das genannte Verfahren den folgenden Schritt umfasst:
- gemäß einer ersten Variante, Formen eines Moduls mit einer Buchse, an welche ein kombinierter Temperatur- und Harnstoffqualitätssensor (101) angeschlossen werden kann, oder
- gemäß einer zweiten Variante, Formen eines Moduls in einer unterschiedlichen Form als gemäß der ersten Variante, mit einer Buchse, an welche ein Sensor (102) nur für Temperaturen angeschlossen werden kann,
wobei die Buchse in der ersten Variante und die Buchse in der zweiten Variante austauschbar sind, und
wobei die genannte elektrische Schnittstelle in jedem der obigen Varianten des Moduls identisch ist.

## Revendications

1. Module pour un système de RCS, le module comportant une embase (110) avec une douille et un capteur (101) de détection combinée de température et de qualité de l'urée ou, en variante, un capteur (102) de détection de température seulement installé dans ladite douille, le module comprenant en outre une interface électrique connectée, respectivement, audit capteur (101) de détection combinée de température et de qualité de l'urée ou audit capteur (102) de détection de température seulement, les deux types de capteurs occupant la même surface et comportant les mêmes moyens d'installation mécanique, et ladite interface électrique étant conçue pour se connecter soit audit capteur (101) de détection combinée de température et de qualité de l'urée, soit audit capteur (102) de détection de température.

2. Système de RCS comprenant un module selon la revendication 1 et une unité de commande électronique, ladite interface électrique connectant ledit capteur (101) de détection combinée de température et de qualité de l'urée à ladite unité de commande électronique, ladite unité de commande électronique étant configurée pour lire un signal reçu par le biais de ladite interface électrique sous forme de données de capteur numériques.

3. Système de RCS selon la revendication 2, dans lequel ladite unité de commande électronique est configurée en outre pour lire un signal reçu de ladite interface électrique sous forme de données de capteur analogiques, lorsque ledit signal provient d'un capteur (102) de détection de température.

4. Véhicule à moteur comprenant le système de RCS selon la revendication 2 ou la revendication 3.

5. Procédé de fabrication d'un module pour un système de RCS, le module comportant une embase (110) avec une douille et un capteur pouvant être installé dans ladite douille, le module comprenant en outre une interface électrique pouvant être connectée audit capteur, ledit procédé comprenant les étapes suivantes :
- selon une première variante, mouler un module avec une douille dans laquelle un capteur (101) de détection combinée de température et de qualité de l'urée peut être installé, ou
- selon une seconde variante, mouler un module d'une forme différente de celle de ladite première variante, avec une douille dans laquelle un capteur (102) de détection de température seulement peut être installé, la douille dans la première variante et la douille dans la seconde variante étant interchangeables, et
dans lequel ladite interface électrique est identique dans chacune des variantes ci-dessus dudit module.
